# FASCICULE DE BREVET EUROPEEN

(11) **EP 2 163 011 B1**
(45) Date de publication et mention de la délivrance du brevet: **10.05.2017**
(21) Numéro de dépôt: 08805975.3
(22) Date de dépôt: 11.06.2008
(51) Int. Cl.: H04B 10/29

(54) **RESEAU OPTIQUE LONGUE DISTANCE AVEC LOCALISATION DES MOYENS D'AMPLIFICATION AU NIVEAU DU CENTRAL OPTIQUE**
OPTISCHES FERNNETZ MIT STANDORT FÜR VERSTÄRKUNGSVORRICHTUNG AM OPTISCHEN AUSTAUSCH
LONG RANGE OPTICAL NETWORK WITH LOCATION OF AN AMPLIFICATION MEANS AT THE OPTICAL EXCHANGE

(30) Priorité: 11.06.2007 FR 0755645
(43) Date de publication de la demande: 17.03.2010
(73) Titulaire: Orange, 75015 Paris (FR)
(72) Inventeur: GENAY, Naveena, F-22300 Lannion (FR); BROCHIER, Nicolas, F-22970 Ploumagoar (FR); LANDOUSIES, Bernard, F-22700 Louannec (FR)
(86) Numéro de dépôt international: PCT/FR2008/051040
(87) Numéro de publication internationale: WO 2009/001018

(56) Documents cités:
- EP-A- 1 227 606
- US-A- 5 875 054
- US-A1- 2005 206 998
- PLAATS VAN DER J C ET AL: "AMPLIFIED BIDIRECTIONAL TRANSMISSION AT 1.55 MUM IN A DISTRIBUTIVE AM-SCM CATV SYSTEM WITH AN ASYMMETRICAL BIDIRECTIONAL OPTICAL BRANCHING AMPLIFIER" OFC, OPTICAL FIBER COMMUNICATION CONFERENCE TECHNICAL DIGEST SERIES, WASHINGTON, DC, US, vol. 8, 26 février 1995 (1995-02-26), pages 64-65, XP000517648

## Description

L'invention concerne le domaine des réseaux d'accès optique et plus particulièrement, le domaine des réseaux d'accès optiques passifs ou PON (Passive Optical Networks).

Les réseaux d'accès optiques passifs présentent une portée classique de l'ordre de 20 km (kilomètres). Cette portée limitée du réseau tient au fait que dans les réseaux optiques passifs, les différents composants optiques que sont, par exemple, les coupleurs optiques, les multiplexeurs optiques ou les fibres optiques, occasionnent des pertes de puissance optique des signaux transitant dans le réseau et que les signaux émis ne peuvent pas être amplifiés sans contraintes pour compenser de telles pertes. En effet, dans un réseau optique passif, les signaux optiques descendants, c'est-à dire les signaux optiques émis par le central à destination des abonnés, et les signaux optiques remontants, c'est-à-dire les signaux optiques émis par les équipements abonnés à destination du central optique, sont véhiculés par une unique fibre optique. Ceci permet de réduire le coût du réseau. Toutefois, l'utilisation d'une unique fibre optique pour véhiculer les signaux optiques descendants et remontants introduit des contraintes sur les puissances d'émission de ces signaux optiques, ce qui se traduit par une portée limitée du réseau.

Si la portée des réseaux d'accès optiques passifs est suffisante dans les zones urbaines où les abonnés sont situés à des distances relativement faibles des centraux optiques, de l'ordre de 5 à 10 km, ce n'est pas le cas des abonnés situés dans les zones rurales. Dans ces zones, les abonnés sont souvent dispersés géographiquement et sont donc le plus souvent situés à une distance des centraux optiques supérieure à la portée classique d'un réseau optique passif. Ces abonnés ne peuvent donc pas bénéficier de la transmission haut débit offerte par les réseaux optiques passifs et par conséquent des services offerts qui nécessitent une connexion à haut débit.

Afin de pallier cet inconvénient, les inventeurs de la présente demande de brevet, lors de travaux précédents ont réalisé un réseau optique passif longue distance. Un tel réseau optique passif longue distance est décrit dans la demande de brevet français n°06 52705 au nom du déposant de la présente demande de brevet. Il s'agit par exemple d'un réseau de type point à multipoints tel que représenté à la figure 1. Un central optique OC constitue une première extrémité du réseau. Une première extrémité d'une fibre optique 14 est connectée à la sortie du central optique OC. Une deuxième extrémité de la fibre optique 14 est connectée à l'entrée d'au moins un coupleur optique 15 une entrée vers N sorties, N représentant le nombre de branches que possède le réseau. La fibre optique 14 est appelée branche principale du réseau. Une première extrémité d'une fibre optique 16ⱼ, j ∈ {1, 2, ..., N}, est connectée à l'une des N sorties Sⱼ du coupleur optique 15. Une deuxième extrémité de la fibre optique 16ⱼ est connectée à un dispositif de terminaison de ligne 17ⱼ, i ∈ {1, 2, ..., N} auquel sont connectés un ou plusieurs abonnés. Les fibres optiques 16₁ à 16_{N} sont appelées branches secondaires du réseau.

Le central optique OC comporte un premier laser 10 émettant un signal optique associé à une longueur d'onde particulière. Ce signal optique véhicule dans le réseau des données à destination des différents abonnés connectés selon le principe du multiplexage temporel par exemple. Le central optique comporte également une deuxième diode laser 110 émettant un signal optique d'amplification associé à une longueur d'onde particulière distincte de la longueur d'onde associée au signal optique de données.

Dans un tel réseau, une section de fibre optique dopée à l'erbium 18 est insérée dans la fibre optique principale 14. Cette section de fibre optique 18 sert de milieu d'amplification passif.

Le signal optique d'amplification issu de la première diode laser 110 excite les atomes d'erbium présents dans la section de fibre optique 18. Lors du retour des atomes d'erbium à leur état non excité, ceux-ci libèrent des photons en vertu du principe de l'émission stimulée dont la longueur d'onde correspond à la longueur d'onde du signal optique de données transitant dans le réseau. Ces photons vont permettre d'augmenter la puissance optique du signal de données. Une telle technique est dite technique d'amplification déportée puisque le milieu d'amplification 18 se situe dans le réseau alors que les moyens d'amplification, ici la diode laser 110, se situent dans le central optique OC. Ainsi, en amplifiant la puissance optique du signal de données, il est possible de lui faire parcourir une distance plus grande. Un tel réseau peut atteindre une portée de l'ordre de la centaine de kilomètres.

La disposition des moyens d'amplification se fait en fonction de la configuration des trajets que peuvent emprunter les branches du réseau au moment de l'installation physique du réseau.

Cependant, du fait que cette disposition se fait a priori, au moment de l'installation du réseau, et que les besoins des utilisateurs (que ce soit en termes de taux de partage, ou en puissance optique de réception) évoluent constamment et notamment après l'installation du réseau, la disposition des moyens d'amplification s'avère peu efficace.

En effet, chacune des branches du réseau d'accès optique pouvant présenter des niveaux de pertes optiques différents, les moyens d'amplification passifs peuvent ne pas se situer au milieu d'une branche en termes de pertes optiques.

Les pertes optiques d'une branche d'un réseau optique sont fonction de la longueur, la vétusté, les composants (coupleurs optiques, multiplexeurs) etc. de la branche considérée. Chaque branche présente un niveau de pertes optiques qui lui est propre.

L'article de J. C. van der Plaats et al., "Amplified bidirectional transmission at 1.55 µm in a distributive AM-SCM-CATV system with an asymmetrical bidirectional optical branching amplifier", Optical Fiber Communication Conference Technical Digest Series, Washington DC, USA, vol. 8, 26 février 1995, pages 64-65, divulgue un dispositif d'amplification bidirectionnel, mais nécessitant d'être alimenté en énergie.

La demande de brevet européenne EP 1 227 606 A1 divulgue aussi un dispositif d'amplification bidirectionnel, mais nécessitant un signal optique d'amplification injecté depuis chacune des extrémités du réseau.

Il existe donc un besoin d'une solution qui permette de pallier ces inconvénients de l'art antérieur.

L'invention répond à ce besoin en proposant un réseau optique passif comportant un central optique relié par au moins une fibre optique constituant branche dudit réseau à au moins un premier dispositif de terminaison de ligne, ledit central optique comprenant :
- des moyens d'émission/réception d'au moins un signal optique de données,
- des moyens d'émission d'au moins un signal optique d'amplification,
- ladite branche permettant la transmission bidirectionnelle du signal optique de données et du signal optique d'amplification.

Un tel réseau est particulier en ce que ladite branche comprend au moins un dispositif d'amplification passif du signal optique de données, le dispositif comprenant :
- un premier milieu d'amplification passif apte à amplifier la puissance optique du signal optique de données lorsque celui-ci parcourt la branche dans un premier sens de transmission,
- un deuxième milieu d'amplification passif apte à amplifier la puissance optique du signal optique de données lorsque celui-ci parcourt la branche dans un deuxième sens de transmission, le premier et le deuxième milieux d'amplification passifs étant destinés à être excités par le signal optique d'amplification,
- des moyens de sélection du gain en puissance optique du premier et du deuxième milieu d'amplification en fonction de pertes optiques associées respectivement au premier et au deuxième sens de transmission du signal optique de données.

Le signal d'amplification est un signal continu émis par des moyens d'amplification disposés dans le central optique afin d'exciter les premier et deuxième milieux d'amplification insérés dans une branche du réseau selon l'invention. De tels moyens d'amplification sont couramment appelés pompe. En sortie de la pompe, le signal optique d'amplification est injecté dans une branche du réseau connectée au central optique, comme par exemple la branche principale, avec le signal optique de données descendant.

L'invention se propose d'adapter le gain en puissance optique du premier et du deuxième milieux d'amplification passifs en fonction de pertes optiques associées respectivement au premier et au deuxième sens de transmission du signal optique de données de sorte que chacun des milieux d'amplification passifs puissent amplifier respectivement pour le premier milieu d'amplification, le signal optique transmis depuis le central optique, ou sens de transmission descendant et pour le deuxième milieu d'amplification, le signal optique transmis depuis le dispositif de terminaison de ligne, ou sens de transmission remontant. Il est ainsi possible d'adapter le gain en puissance optique afin de compenser les pertes optiques liées aux modifications pouvant intervenir au cours de l'exploitation du réseau par l'opérateur en télécommunications gestionnaire pour les deux sens de transmission du signal optique de données.

La sélection du gain en puissance optique des premier et deuxième milieux d'amplification à l'aide d'un dispositif disposé en ligne dans au moins l'une des branches constitutives du réseau permet de mutualiser les moyens d'amplification disposés au niveau du central optique entre celui-ci et les divers dispositifs de terminaison de lignes. Compte tenu du nombre d'abonnés pouvant être connectés à un réseau d'accès optique passif, le fait de mutualiser les moyens d'amplification actifs présents dans le central optique, entre celui-ci et les dispositifs de terminaison de lignes permet, en outre, de réduire de manière significative le coût d'exploitation du réseau.

Selon une autre caractéristique du réseau objet de l'invention, les moyens de sélection du gain en puissance optique comprennent des moyens de répartition de la puissance optique dudit signal optique d'amplification entre le premier et le deuxième milieu d'amplification passifs.

Au niveau du dispositif d'amplification, la puissance optique du signal d'amplification est répartie entre le premier et le deuxième milieu d'amplification en fonction d'un taux de répartition de moyens de répartition défini par l'opérateur en télécommunications gestionnaire du réseau. Pour un milieu d'amplification donné, par exemple le premier milieu d'amplification, le taux de répartition de la puissance optique du signal de pompe vaut x, x pouvant varier entre 0 et 1, le taux de répartition associé au deuxième milieu d'amplification étant alors de 1-x. La valeur du taux de répartition x pour un milieu d'amplification donné varie en fonction des pertes optique. Ceci permet d'allouer une fraction plus ou moins importante de la puissance optique du signal de pompe à un milieu d'amplification en fonction des pertes selon le sens de transmission des signaux de données.

Selon une autre caractéristique du réseau objet de l'invention, les moyens de sélection du gain en puissance optique comprennent des moyens de modification de la valeur d'un taux de répartition de la puissance optique du signal optique d'amplification entre le premier et le deuxième milieu d'amplification.

En faisant varier dynamiquement la valeur du taux de répartition de la puissance optique du signal de pompe, il est possible d'adapter celui-ci aux modifications pouvant intervenir au cours de l'exploitation du réseau par l'opérateur en télécommunications gestionnaire.

En effet, au cours de l'exploitation du réseau, des composants optiques peuvent être remplacés, comme par exemple des coupleurs optiques ou des sections de fibres optiques endommagées, des dispositifs de terminaison de ligne peuvent, également être ajoutés ou supprimés en fonction des besoins. Toutes ces modifications impactent sur la valeur des pertes d'une liaison optique.

La présence de moyens de modification dynamique de la valeur du taux de répartition de la puissance du signal de pompe permet d'adapter celui-ci en fonction des changements intervenant dans le réseau de manière simple.

Afin de conserver le caractère passif du réseau optique, les moyens de modification dynamique de la valeur du taux de répartition de la puissance optique du signal de pompe, ceux-ci sont téléalimentés.

Selon un autre mode de réalisation du réseau objet de l'invention, les moyens de sélection du gain en puissance optique comprennent des moyens de séparation d'au moins une première et une deuxième composantes optiques d'amplification du signal optique d'amplification et des moyens d'aiguillage de ladite au moins une première composante optique d'amplification vers le premier milieu d'amplification passif, et de ladite au moins une deuxième composante optique d'amplification vers le deuxième milieu d'amplification passif.

En injectant dans chaque milieu d'amplification passif une composante optique d'amplification dédiée, le gain en puissance optique de chaque milieu d'amplification se trouve augmenté. Ceci tient au fait que la puissance optique des composantes optiques d'amplification n'est pas partagée entre les deux milieux d'amplification passifs.

Selon une caractéristique du réseau objet du deuxième mode de réalisation de l'invention, le premier et deuxième milieu d'amplification passif sont constitués chacun par au moins une section d'un guide d'onde dopé au moyens d'ions de terre rare, les ions de terres rares utilisés dans le premier milieu d'amplification passif étant distinct des ions de terres rares utilisés dans le deuxième milieu d'amplification passif.

Dans ce mode de réalisation du réseau objet de l'invention, deux sections de guide d'onde dopé au moyen d'ions de terre rare tels que par exemple l'ion erbium et l'ion ytterbium, sont insérées dans une branche du réseau pour constituer le premier et le deuxième milieu d'amplification passif. Le guide d'onde utilisé peut être par exemple une fibre optique ou un guide d'onde de forme rectangulaire réalisé en verre.

En injectant une composante du signal optique d'amplification dans chacune des deux sections de guide d'onde dopé au moyen d'ions de terre rare, il est possible d'amplifier les signaux optiques descendant et remontant transitant par cette branche du réseau. Une telle technique d'amplification est appelée technique d'amplification optique déportée ou ROPA, pour *Remote Optical Pumped Amplification.*

L'invention concerne également un dispositif d'amplification passif de la puissance optique d'au moins un signal optique de données, ledit dispositif étant inséré au moyen d'un premier et d'un deuxième module de couplage optique dans une fibre optique constituant branche d'un réseau optique passif, ladite branche reliant un central optique à au moins un composant optique.

Un tel dispositif est particulier en ce qu'il comporte un premier milieu d'amplification passif apte à amplifier la puissance optique du signal optique de données lorsque celui-ci parcourt la branche dans un premier sens de transmission,
- un deuxième milieu d'amplification passif apte à amplifier la puissance optique du signal optique de données lorsque celui-ci parcourt la branche dans un deuxième sens de transmission, le premier et le deuxième milieux d'amplification passifs étant destinés à être excités par un deuxième signal optique d'amplification issu du central optique,
- des moyens de sélection du gain en puissance optique du premier et du deuxième milieu d'amplification en fonction de pertes optiques associées respectivement au premier et au deuxième sens de transmission du signal optique de données.

Les moyens de sélection du gain de puissance optique reçoivent les signaux optiques de données descendant et d'amplification issus du central optique. Le signal d'amplification est introduit dans le premier et dans le deuxième milieu d'amplification alors que le signal optique de données descendant issu du central optique est transmis au travers du premier milieu d'amplification. Une fois sa puissance optique amplifiée, le signal optique de données descendant est réinjecté dans la branche du réseau.

Un signal optique de données remontant issu d'un dispositif de terminaison de ligne est injecté dans le dispositif d'amplification, ce signal optique de données remontant est ensuite injecté dans le deuxième milieu d'amplification, puis transmis au central optique après avoir été réinjecté dans la branche du réseau.

Un tel dispositif présente l'avantage d'être complètement passif.

Selon une première caractéristique du dispositif objet de l'invention, les moyens de sélection sélective du gain en puissance optique comprennent des moyens de modification de la valeur d'un taux de répartition de la puissance optique du signal optique d'amplification entre le premier et le deuxième milieux d'amplification.

Selon un autre mode de réalisation du dispositif, les moyens de sélection du gain en puissance optique comprennent des moyens de séparation d'au moins une première et une deuxième composantes optiques d'amplification du signal optique d'amplification et des moyens d'aiguillage de ladite au moins une première composante optique d'amplification vers le premier milieu d'amplification passif, et de ladite au moins une deuxième composante optique d'amplification vers le deuxième milieu d'amplification passif.

D'autres caractéristiques et avantages apparaîtront à la lecture de modes de réalisation préférés décrits en référence aux dessins dans lesquels :
- la figure 1 représente un réseau d'accès optique passif longue portée connu d'un des inventeurs de la présente demande de brevet,
- la figure 2 représente un réseau optique passif longue portée conforme à l'invention,
- la figure 3 représente un dispositif d'amplification passif conforme à un premier mode de réalisation de l'invention,
- la figure 4 représente un dispositif d'amplification passif conforme à un deuxième mode de réalisation de l'invention
- la figure 5 représente un autre mode de réalisation d'un réseau optique passif longue portée conforme à l'invention comprenant au moins un dispositif d'amplification selon le premier mode de réalisation.

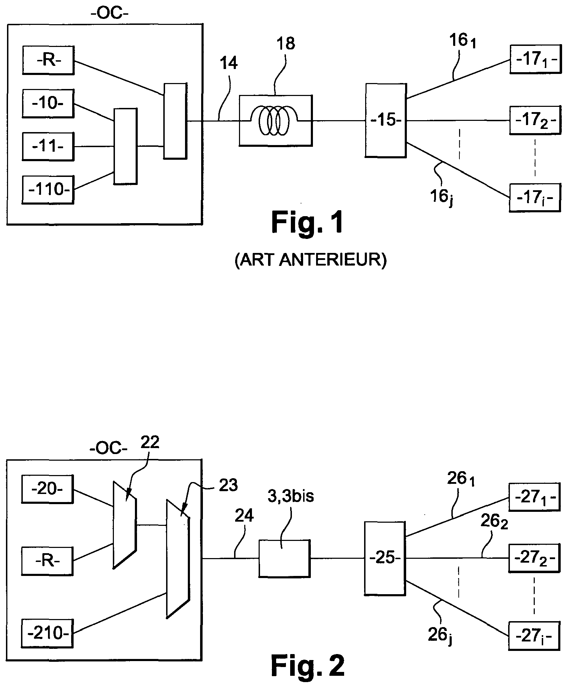

La figure 2 représente un réseau optique passif longue portée de type point à multipoints selon une première réalisation de l'invention. Un central optique OC constitue une première extrémité du réseau. Une première extrémité d'une fibre optique 24 est connectée à la sortie du central optique OC. Une deuxième extrémité de la fibre optique 24 est connectée à l'entrée d'au moins un coupleur optique 25 une entrée vers N sorties, N représentant le nombre de branches que possède le réseau. La fibre optique 24 est appelée branche principale du réseau. Une première extrémité d'une fibre optique 26ⱼ, j ∈ {1, 2, ..., N}, est connectée à l'une des N sorties Sⱼ du coupleur optique 25. Une deuxième extrémité de la fibre optique 26ⱼ est connectée à un dispositif de terminaison de ligne 27ᵢ, i ∈ {1, 2, ..., N} auquel sont connectés un ou plusieurs abonnés. Les fibres optiques 26₁ à 26_{N} sont appelées branches secondaires du réseau.

Le central optique OC comporte un premier laser 20 émettant un premier signal optique associé à une longueur d'onde particulière. Ce premier signal optique véhicule dans le réseau des données à destination des différents abonnés connectés selon le principe du multiplexage temporel. Le central optique comporte également une deuxième diode laser 210 émettant un deuxième signal optique d'amplification associé à une longueur d'onde particulière distincte de la longueur d'onde associée au premier signal optique de données. Le deuxième signal optique d'amplification est un signal continu, c'est-à-dire qu'il ne véhicule pas de données dans le sens descendant. Le central optique OC comporte enfin un module de réception R des signaux émis par les dispositifs de terminaison de ligne 27₁ à 27_{N}.

La sortie du laser 20 et l'entrée de moyens de réception R sont reliées respectivement à une première et une deuxième entrée d'un multiplexeur optique 22 deux entrées vers une sortie. La sortie du multiplexeur 22 est, elle-même, connectée à une première entrée d'un deuxième multiplexeur optique 23 deux entrées vers une sortie. La seconde entrée du deuxième multiplexeur 23 est reliée à la sortie de la diode laser 210. Enfin, la sortie du deuxième multiplexeur 23 est reliée à la première extrémité de la fibre principale 24. Les premier et deuxième multiplexeurs 22, 23 permettent d'une part aux signaux émis par le laser 20 et la diode laser 210 de transiter dans le réseau en direction des dispositifs de terminaison de ligne 27₁ à 27_{N}, et d'autre part aux signaux émis par les dispositifs de terminaison de ligne de transiter dans le réseau en direction du central optique OC et des moyens de réceptions R.

Chacune des fibres optiques 24 et 26₁ à 26_{N} constitutives du réseau permet un transit bidirectionnel des signaux optiques dans le réseau, c'est-à-dire que les signaux remontants, d'un dispositif de terminaison de ligne vers le central optique, et les signaux descendants, du central vers les dispositifs de terminaison de ligne, circulent dans la même fibre optique. Ceci permet de réduire les coûts lors de la mise en place du réseau et de faciliter sa maintenance.

Afin d'adapter le gain en puissance optique pour compenser les pertes optiques liées aux modifications pouvant intervenir au cours de l'exploitation du réseau par l'opérateur en télécommunications gestionnaire, les inventeurs de la présente demande de brevet proposent d'introduire dans la branche principale 24 du réseau optique passif, un dispositif d'amplification passif 3, 3bis permettant d'adapter le gain en puissance optique d'un milieu d'amplification en fonction de pertes optiques,.

La présence d'un tel dispositif d'amplification 3, 3bis, permet également de supprimer les moyens d'amplification actifs de la puissance optique d'un signal classiquement présents en extrémité de ces réseaux au niveau des différents dispositifs de terminaison de lignes ou au niveau du coupleur optique 25 afin d'amplifier la puissance optique des signaux optiques remontant.

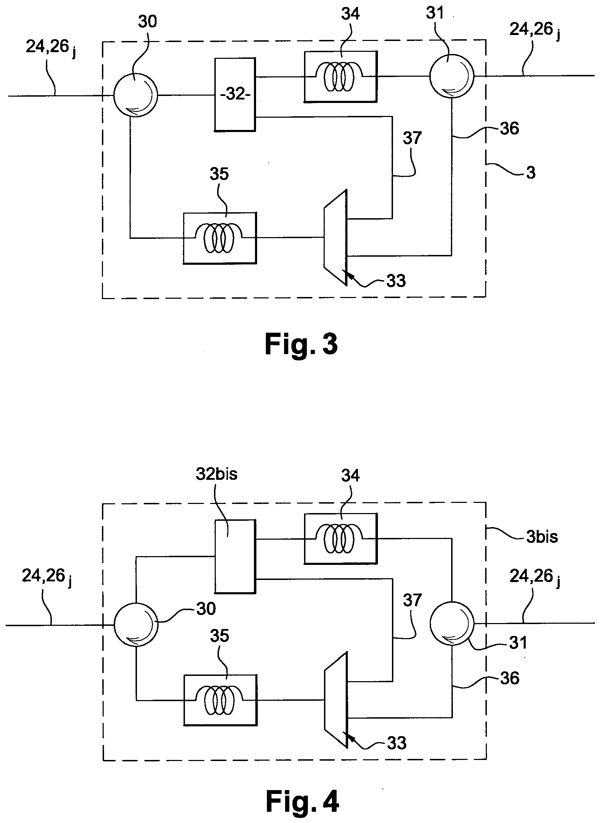

Un dispositif d'amplification passif 3 conforme à un premier mode de réalisation est décrit en référence à la figure 3.

Un dispositif d'amplification passif 3 est relié à la branche principale au moyen d'un premier et d'un deuxième module de couplage 30, 31. De tels modules de couplage sont constitués par exemple par un circulateur optique à 3 entrées, ainsi une première entrée du circulateur optique est reliée à la fibre optique principale. Le dispositif d'amplification 3 comporte des moyens de sélection du gain en puissance optique connectés à une deuxième entrée du module de couplage 30. Dans ce premier mode de réalisation, les moyens de sélection du gain en puissance optique 32 sont constitués par des moyens de répartition de la puissance optique d'un signal optique. De tels moyens de répartition 32 se présentent sous la forme d'un coupleur optique 1 vers 2, c'est-à-dire une entrée vers deux sorties. Dans un tel cas de figure, l'entrée du coupleur optique est reliée à la deuxième entrée du module de couplage 30. Une première sortie des moyens de répartition de la puissance 32 est reliée à une première extrémité d'une première section d'un guide d'onde dopé au moyens d'ions de terre rare 34. Une telle section de guide d'onde 34 constitue un premier milieu d'amplification passif. Une deuxième extrémité de la première section de guide d'onde dopé au moyen d'ions de terre rare 34 est reliée à une première entrée du deuxième module de couplage 31. Le guide d'onde dopé au moyen d'ions de terre rare 34 est par exemple une fibre optique ou un guide d'onde rectangulaire réalisé en verre. De même, les ions de terre rare utilisés pour doper le guide d'onde sont par exemple des ions erbium ou des ions ytterbium. Dans la suite du texte, le guide d'onde constituant le premier milieu d'amplification 34 est une fibre optique dopée à l'erbium.

Une deuxième sortie des moyens de répartition 32 est reliée à une première extrémité d'une section de fibre optique classique 37. Une deuxième extrémité de la section de fibre optique 37 est reliée à une première entrée de moyens de filtrage en longueur d'onde 33. De tels moyens de filtrage en longueur d'onde 33 sont par exemple constitués par un multiplexeur deux entrées vers une sortie. Une deuxième entrée des moyens de filtrage 33 est reliée à une première extrémité d'une deuxième section de fibre optique classique 36. Une deuxième extrémité de la section de fibre optique 36 est reliée à une deuxième entrée du module de couplage 31, la troisième entrée de ce module 31 étant reliée à la branche principale 24.

La sortie des moyens de filtrage 33 est reliée à une première extrémité d'une deuxième section de guide d'onde dopé au moyen d'ions de terre rare 35. Une telle section de guide d'onde 35 constitue un deuxième milieu d'amplification passif. Le deuxième milieu d'amplification 35 est identique au premier milieu d'amplification 34. Une deuxième extrémité de la deuxième section de guide d'onde dopé au moyen d'ions de terre rare 35 est reliée à une troisième entrée du premier module de couplage 30.

Lorsqu'un signal optique est émis par la diode laser 210 située au central optique, celui-ci est injecté dans la fibre optique principale 24 via le multiplexeur 23. Un tel signal optique est dit signal de pompe. Parallèlement, un signal optique de données est émis par le laser 20 au central optique, un tel signal est appelé signal descendant. Le signal descendant est également injecté dans la fibre optique principale au moyen du multiplexeur 23. A l'entrée du dispositif d'amplification 3, le signal de pompe et le signal descendant sont dirigés vers la deuxième entrée du module de couplage 30 et injectés en entrée des moyens de répartition 32 de la puissance optique. Les moyens de répartition de la puissance optique 32 répartissent la puissance optique des signaux optiques reçus en entrée entre ses deux sorties selon un taux de répartition fixé par l'opérateur en télécommunications gestionnaire du réseau optique passif.

Ainsi, lorsque le taux de répartition pour la première sortie des moyens de répartition 32 vaut x, x variant entre 0 et 1, le taux de répartition de la deuxième sortie des moyens de répartition 32 vaut alors 1-x. La valeur du taux de répartition x varie en fonction de la portée que l'opérateur en télécommunications gestionnaire du réseau souhaite conférer à celui-ci, ainsi que la position du dispositif d'amplification dans la branche du réseau. En effet selon la position du dispositif d'amplification 3 dans la branche 24, il peut être nécessaire de modifier le taux de répartition des moyens de répartition 32 pour prendre en compte les différences de pertes optiques selon que le réseau est parcouru dans le sens descendant ou dans le sens remontant. A titre d'exemple, le taux de répartition x peut prendre des valeurs comprises entre 0.2 et 0.5.

Une première fraction du signal de pompe et du signal descendant est injectée dans le premier milieu d'amplification passif 34. Le signal de pompe excite alors le milieu d'amplification 34 de sorte à amplifier la puissance optique du signal descendant. Le signal descendant ainsi amplifié est ensuite réinjecté dans la fibre optique 24 via le module de couplage 31.

Une deuxième fraction du signal de pompe et du signal descendant est introduite dans la deuxième section de fibre optique 37. Cette deuxième fraction des signaux descendant et de pompe est ensuite injectée dans la première entrée des moyens de filtrage 33. Les moyens de filtrage 33 séparent le signal de pompe, qui est injecté dans le deuxième milieu d'amplification 35 afin d'exciter celui-ci, du signal descendant dont la puissance optique est dissipée.

Un signal optique de données émis par un dispositif de terminaison de ligne 27ᵢ est introduit dans le dispositif d'amplification 3 via le module de couplage 31. Un tel signal optique, dit signal remontant, est ensuite injecté dans la première section de fibre optique 36 et de là, dans le deuxième milieu d'amplification 35, où sa puissance optique est amplifiée. Le signal remontant ainsi amplifié est ensuite réinjecté dans la fibre optique principale via la troisième entrée du module de couplage 30.

Un tel dispositif d'amplification 3 permet d'amplifier simultanément des signaux optiques de données descendant et remontant à l'aide de moyens actifs d'amplification uniquement disposés au central optique OC et à l'aide de milieux d'amplification passifs disposés en ligne.

Dans un mode de réalisation particulier du dispositif d'amplification 3, celui-ci comporte des moyens de modification du taux de répartition de la puissance optique du signal de pompe. De tels moyens de modification du taux de répartition de la puissance optique du signal de pompe sont téléalimentés afin de conserver le caractère passif du réseau optique.

La présence de ces moyens dans le dispositif d'amplification 3 permet de répondre aux modifications intervenant dans le réseau lors d'opérations de maintenance. Ces modifications peuvent consister par exemple à remplacer un composant optique, comme le coupleur 25 par un autre dont les caractéristiques optiques, et notamment les pertes, ne sont plus les mêmes. Il devient alors intéressant de pouvoir modifier le taux de répartition de la puissance optique du signal de pompe et ainsi s'assurer de la bonne transmission des signaux optiques remontant et descendant.

Un dispositif d'amplification passif 3bis conforme à un deuxième mode de réalisation est décrit en référence à la figure 4. Les éléments constitutifs du dispositif d'amplification 3bis communs au mode de réalisation décrit en référence à la figure 3 portent les mêmes références et ne seront pas décrits. Dans ce mode de réalisation, le central optique comporte une troisième diode laser (non représentée sur les figures) émettant une deuxième composante optique d'amplification associée à une longueur d'onde particulière distincte de la longueur d'onde associée à la première composante optique d'amplification émise par la deuxième diode laser 210. Ainsi dans ce mode de réalisation, le signal optique d'amplification est constitué de la première et de la deuxième composantes optiques d'amplification.

Un dispositif d'amplification passif 3bis est relié à la branche principale au moyen d'un premier et d'un deuxième module de couplage 30, 31. Le dispositif d'amplification 3bis comporte des moyens de sélection du gain en puissance optique 32bis connectés à une deuxième entrée du module de couplage 30. Dans ce deuxième mode de réalisation, les moyens de sélection du gain en puissance optique 32bis sont constitués de premiers moyens de filtrage en longueur d'onde. De tels moyens de répartition 32bis se présentent sous la forme d'un multiplexeur permettant de séparer les deux composantes optiques d'amplification constituant le signal optique d'amplification. Dans un tel cas de figure, l'entrée du multiplexeur est reliée à la deuxième entrée du module de couplage 30. Une première sortie du coupleur optique 32bis est reliée à une première extrémité d'une première section d'un guide d'onde dopé au moyens d'ions de terre rare 34. Une telle section de guide d'onde 34 constitue un premier milieu d'amplification passif. Une deuxième extrémité de la première section de guide d'onde dopé au moyen d'ions de terre rare 34 est reliée à une première entrée du deuxième module de couplage 31.

Une deuxième sortie du multiplexeur 32bis est reliée à une première extrémité d'une section de fibre optique classique 37. Une deuxième extrémité de la section de fibre optique 37 est reliée à une première entrée de deuxièmes moyens de filtrage en longueur d'onde 33. De tels moyens de filtrage en longueur d'onde 33 sont par exemple constitués par un multiplexeur deux entrées vers une sortie. Une deuxième entrée des moyens de filtrage 33 est reliée à une première extrémité d'une deuxième section de fibre optique classique 36. Une deuxième extrémité de la section de fibre optique 36 est reliée à une deuxième entrée du module de couplage 31, la troisième entrée de ce module 31 étant reliée à la branche principale 24.

La sortie des moyens de filtrage 33 est reliée à une première extrémité d'une deuxième section de guide d'onde dopé au moyen d'ions de terre rare 35. Une telle section de guide d'onde 35 constitue un deuxième milieu d'amplification passif. Le deuxième milieu d'amplification 35 est dopé au moyen d'ions de terres rares distincts de ceux utilisés pour doper le premier milieu d'amplification 34. En utilisant deux milieux d'amplification passifs, le gain en puissance d'amplification de chacun des milieux d'amplification passifs peut être adapté en fonction des pertes optiques de la branche du réseau selon le sens de transmission du signal de données. Une deuxième extrémité de la deuxième section de guide d'onde dopé au moyen d'ions de terre rare 35 est reliée à une troisième entrée du premier module de couplage 30.

Dans une autre réalisation du dispositif d'amplification 3bis, les deux milieux d'amplification passifs 34 et 35 sont identiques.

Lorsque les deux composantes optiques constituant le signal optique d'amplification sont émises par la première diode laser 210 et la deuxième diode laser, celles-ci sont injectées dans la fibre optique principale 24 via le multiplexeur 23. Un tel signal optique d'amplification est dit signal de pompe. Parallèlement, un signal optique de données est émis par le laser 20 au central optique, un tel signal est appelé signal descendant. Le signal descendant est également injecté dans la fibre optique principale au moyen du multiplexeur 23. A l'entrée du dispositif d'amplification 3bis, le signal de pompe et le signal descendant sont dirigés vers la deuxième entrée du module de couplage 30 et injectés en entrée du multiplexeur 32bis. Le multiplexeur 32bis sépare les deux composantes optiques du signal de pompe. La première composante optique d'amplification est injectée dans le premier milieu d'amplification 34 afin d'exciter celui-ci, et la deuxième composante optique d'amplification est injectée dans le deuxième milieu d'amplification 35 afin de l'exciter.

Ainsi, la valeur du gain en amplification des milieux d'amplification passifs peut être adaptée en fonction de la portée que l'opérateur en télécommunications gestionnaire du réseau souhaite conférer à celui-ci, ainsi que la position du dispositif d'amplification dans la branche du réseau. En effet selon la position du dispositif d'amplification 3bis dans la branche 24, il peut être nécessaire de modifier le gain en amplification des milieux d'amplification passifs 34 et 35 pour prendre en compte les différences de pertes optiques des signaux optiques de données descendant ou remontant.

La première composante optique du signal de pompe et le signal descendant est injectée dans le premier milieu d'amplification passif 34. La première composante optique d'amplification excite alors le milieu d'amplification 34 de sorte à amplifier la puissance optique du signal descendant. Le signal descendant ainsi amplifié est ensuite réinjecté dans la fibre optique 24 via le module de couplage 31.

La deuxième composante optique du signal de pompe est introduite dans la deuxième section de fibre optique 37. Cette deuxième composante optique d'amplification est ensuite injectée dans la première entrée des moyens de filtrage 33. Les moyens de filtrage 33 injectent la deuxième composante optique d'amplification dans le deuxième milieu d'amplification 35 afin d'exciter celui-ci.

Un signal optique de données émis par un dispositif de terminaison de ligne 27ᵢ est introduit dans le dispositif d'amplification 3bis via le module de couplage 31. Un tel signal optique, dit signal remontant, est ensuite injecté dans la première section de fibre optique 36 et de là, dans le deuxième milieu d'amplification 35, où sa puissance optique est amplifiée. Le signal remontant ainsi amplifié est ensuite réinjecté dans la fibre optique principale via la troisième entrée du module de couplage 30.

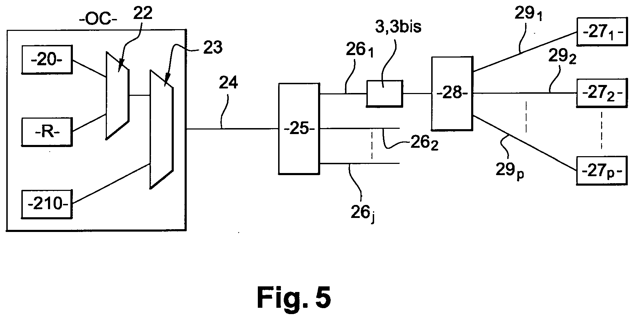

La figure 5 représente un deuxième mode de réalisation d'un réseau optique passif selon l'invention. Les éléments constitutifs du réseau communs au mode de réalisation décrit en référence à la figure 2 portent les mêmes références et ne seront pas décrits.

Un réseau optique passif tel que représenté à la figure 4 comporte deux étages de couplage : un premier étage disposé entre le premier coupleur optique 25 et un deuxième coupleur optique 28 une entrée vers N sorties, le premier coupleur optique 25 étant relié au deuxième coupleur optique 28 via une branche secondaire du réseau 26ᵢ. Sur la figure 4, un seul coupleur optique 28 est représenté pour des raisons de clarté, mais il faut comprendre qu'un tel coupleur est disposé sur chacune des branches secondaires 26ᵢ.

Un dispositif d'amplification passif 3 conforme au premier mode de réalisation est disposé dans la branche secondaire 26ᵢ afin d'amplifier les signaux optiques transmis dans cette branche dans le sens remontant et dans le sens descendant.

Dans ce mode de réalisation, la première extrémité de la fibre optique secondaire 26ᵢ est reliée à une sortie Sᵢ du coupleur optique 25 et la deuxième extrémité de la fibre optique secondaire 26ᵢ est reliée à l'entrée du deuxième coupleur optique 28.

Une première extrémité d'une fibre optique 29ₚ, p ∈ {1, 2, ..., N}, est connectée à l'une des N sorties Sₚ du coupleur optique 28. Une deuxième extrémité de la fibre optique 29ₚ est connectée à un dispositif de terminaison de ligne 27ᵢ, i ∈ {1, 2, ..., N} auquel sont connectés un ou plusieurs abonnés.

Un tel réseau permet, en plus d'augmenter la portée du réseau, d'augmenter également son taux de partage, ce qui tend à réduire d'avantage les coûts d'exploitation.

A titre d'exemple, si le signal optique descendant est émis à une longueur d'onde de 1550 nanomètre, le signal de pompe émis par la diode laser 210 doit être émis à une longueur d'onde de 1480 nanomètres.

Ainsi pour des moyens d'amplification dont la puissance d'émission est de 200 mW le bilan optique dans le sens descendant est indiqué dans les tableaux suivants :
Les tableaux suivants indiquent à titre d'exemple les bilans de puissance optique dans le sens descendant et dans le sens remontant correspondant à un réseau tel que représenté à la figure 4 dans lequel : le signal optique descendant est émis à une longueur d'onde de 1550 nanomètre, et le signal de pompe émis par la diode laser 210 est émis à une longueur d'onde de 1480 nanomètres à une puissance de 200 mW (milliwatt). La longueur d'onde du signal de pompe est choisie de sorte à pouvoir amplifier la puissance optique du signal descendant et du signal remontant.

| Composants | Pertes optiques (dB) |
|---|---|
| 60 km de fibre | 12 |
| 2 coupleurs optiques 1 vers 8 | 22 |
| 2 Circulateurs optiques | 2 |
| Coupleur asymétrique 0,3 | 5 |
| Pertes totales | 41 |

| Bilan optique | Puissance (dBm) |
|---|---|
| Puissance d'émission côté client | 0 |
| Pertes totales | 41 |
| Gain de l'amplificateur optique en ligne sens descendant | 18.5 |
| Puissance détectée par le photodétecteur (sensibilité = -24 dBm) | -22,5 |

De même pour le sens remontant, le bilan optique est donné par les tableaux suivants :

| Composants | Pertes optiques (dB) |
|---|---|
| 60 km de fibre | 12 |
| 2 coupleurs optiques 1 vers 8 | 22 |
| 2 Circulateurs optiques | 2 |
| Coupleur asymétrique 0,7 | 1,6 |
| Multiplexeur pompe et signal | 1 |
| Pertes totales | 38,6 |

| Bilan optique | Puissance (dBm) |
|---|---|
| Puissance d'émission côté client | 0 |
| Pertes totales | 38,6 |
| Gain de l'amplificateur optique en ligne sens descendant | 17,4 |
| Puissance détectée par le photodétecteur (sensibilité = -24 dBm) | -21,2 |

Dans ces tableaux, on voit que les budgets optiques correspondant aux sens de transmission descendant et remontant sont équilibrés. Dans le sens remontant, on constate que la valeur de la puissance optique reçue par le central optique OC est supérieure à la puissance du signal optique de rétrodiffusion Rayleigh. Ainsi, les moyens de réception R placés dans le central optique OC ne sont pas éblouis par le signal rétrodiffusé et la réception des composantes optiques de données remontantes n'est pas perturbée.

## Revendications

1. Réseau optique passif comportant un central optique (OC) relié par au moins une fibre optique (24, 26i) constituant branche dudit réseau à au moins un premier composant optique (25, 28), ledit central optique comprenant :
- des moyens d'émission/réception (20, R) d'au moins un signal optique de données,
- des moyens d'émission (210) d'au moins un signal optique d'amplification,
- ladite branche permettant la transmission bidirectionnelle du signal optique de données et du signal optique d'amplification,
**caractérisé en ce que** ladite branche comprend au moins un dispositif d'amplification passif (3, 3bis) du signal optique de données, le dispositif étant inséré au moyen d'un premier (30) et d'un deuxième (31) circulateur optique dans la branche et comprenant :
- un premier milieu d'amplification passif (34) apte à amplifier la puissance optique du signal optique de données lorsque celui-ci parcourt la branche dans un premier sens de transmission,
- un deuxième milieu d'amplification passif (35) apte à amplifier la puissance optique du signal optique de données lorsque celui-ci parcourt la branche dans un deuxième sens de transmission, le premier et le deuxième milieux d'amplification passifs étant destinés à être excités par le signal optique d'amplification,
- des moyens de sélection (32, 32bis) du gain en puissance optique du premier et du deuxième milieu d'amplification en fonction de pertes optiques associées respectivement au premier et au deuxième sens de transmission du signal optique de données,
- le premier circulateur optique (30) à trois entrées, la première entrée étant reliée à la branche vers le central optique (OC), la deuxième entrée étant reliée aux moyens de sélection (32, 32bis), la troisième entrée étant reliée au deuxième milieu d'amplification (35),
- le deuxième circulateur optique (31) à trois entrées, la première entrée étant reliée à la branche vers le premier composant optique (25, 28), la deuxième entrée étant reliée à des moyens de filtrage (33) en longueur d'onde, la troisième entrée étant reliée au premier milieu d'amplification (34).

2. Réseau optique selon la revendication 1, dans lequel les moyens de sélection (32) du gain en puissance optique comprennent des moyens de répartition de la puissance optique dudit signal optique d'amplification entre le premier (34) et le deuxième (35) milieux d'amplification passifs.

3. Réseau optique selon la revendication 2, dans lequel les moyens de sélection (32) du gain en puissance optique comprennent des moyens de modification de la valeur d'un taux de répartition de la puissance optique du signal optique d'amplification entre le premier (34) et le deuxième (35) milieu d'amplification.

4. Réseau optique selon la revendication 1, dans lequel les moyens de sélection (32bis) du gain en puissance optique comprennent des moyens de séparation d'au moins une première et une deuxième composantes optiques d'amplification du signal optique d'amplification et des moyens d'aiguillage de ladite au moins une première composante optique d'amplification vers le premier milieu d'amplification (34) passif, et de ladite au moins une deuxième composante optique d'amplification vers le deuxième milieu d'amplification (35) passif.

5. Réseau optique selon la revendication 4, dans lequel le premier (34) et deuxième (35) milieu d'amplification passif sont constitués chacun par au moins une section d'un guide d'onde dopé au moyens d'ions de terre rare, les ions de terres rares utilisés dans le premier milieu d'amplification (34) passif étant distinct des ions de terres rares utilisés dans le deuxième milieu d'amplification (35) passif.

6. Dispositif d'amplification (3, 3bis) passif de la puissance optique d'au moins un signal optique de données, ledit dispositif étant inséré au moyen d'un premier (30) et d'un deuxième (31) circulateur optique dans une fibre optique (24, 26i) constituant branche d'un réseau optique passif, ladite branche reliant un central optique (OC) à au moins un composant optique (25, 28),
**caractérisé en ce que** ledit dispositif comporte :
- un premier milieu d'amplification passif (34) apte à amplifier la puissance optique du signal optique de données lorsque celui-ci parcourt la branche dans un premier sens de transmission,
- un deuxième milieu d'amplification passif (35) apte à amplifier la puissance optique du signal optique de données lorsque celui-ci parcourt la branche dans un deuxième sens de transmission, le premier et le deuxième milieux d'amplification passifs étant destinés à être excités par un deuxième signal optique d'amplification issu du central optique,
- des moyens de sélection (32, 32bis) du gain en puissance optique du premier (34) et du deuxième (35) milieu d'amplification en fonction de pertes optiques associées respectivement au premier et au deuxième sens de transmission du signal optique de données,
- le premier circulateur optique (30) à trois entrées, la première entrée étant reliée à la branche vers le central optique (OC), la deuxième entrée étant reliée aux moyens de sélection (32, 32bis), la troisième entrée étant reliée au deuxième milieu d'amplification (35),
- le deuxième circulateur optique (31) à trois entrées, la première entrée étant reliée à la branche vers le premier composant optique (25, 28), la deuxième entrée étant reliée à des moyens de filtrage (33) en longueur d'onde, la troisième entrée étant reliée au premier milieu d'amplification (34).

7. Dispositif selon la revendication 6 dans lequel les moyens de sélection (32, 32bis) du gain en puissance optique comprennent des moyens de modification de la valeur d'un taux de répartition de la puissance optique du signal optique d'amplification entre le premier (34) et le deuxième (35) milieu d'amplification.

8. Dispositif selon la revendication 6 dans lequel les moyens de sélection (32, 32bis) du gain en puissance optique comprennent des moyens de séparation d'au moins une première et une deuxième composantes optiques d'amplification du signal optique d'amplification et des moyens d'aiguillage de ladite au moins une première composante optique d'amplification vers le premier milieu d'amplification passif (34), et de ladite au moins une deuxième composante optique d'amplification vers le deuxième milieu d'amplification passif (35).

## Patentansprüche

1. Passives optisches Netz, umfassend eine optische Zentrale (OC), die durch mindestens eine optische Faser (24, 26i), die einen Zweig des Netzes darstellt, mit mindestens einer ersten optischen Komponente (25, 28) verbunden ist, wobei die optische Zentrale Folgendes umfasst:
- Sende-/Empfangsmittel (20, R) mindestens eines optischen Datensignals,
- Sendemittel (210) mindestens eines optischen Verstärkungssignals,
- wobei der Zweig die bidirektionale Übertragung des optischen Datensignals und des optischen Verstärkungssignals ermöglicht,
**dadurch gekennzeichnet, dass** der Zweig mindestens eine passive Verstärkungsvorrichtung (3, 3bis) des optischen Datensignals umfasst, wobei die Vorrichtung mit Hilfe eines ersten (30) und eines zweiten (31) optischen Zirkulators in den Zweig eingesetzt ist, und umfassend:
- ein erstes passives Verstärkungsmedium (34), das geeignet ist, die optische Leistung des optischen Datensignals zu verstärken, wenn dieses den Zweig in einer ersten Übertragungsrichtung durchquert,
- ein zweites passives Verstärkungsmedium (35), das geeignet ist, die optische Leistung des optischen Datensignals zu verstärken, wenn dieses den Zweig in einer zweiten Übertragungsrichtung durchquert, wobei das erste und das zweite passive Verstärkungsmedium dazu bestimmt sind, von dem optischen Verstärkungssignal erregt zu werden,
- Auswahlmittel (32, 32bis) der optischen Leistungssteigerung des ersten und des zweiten Verstärkungsmediums in Abhängigkeit von optischen Verlusten, die der ersten bzw. der zweiten Übertragungsrichtung des optischen Datensignals zugeordnet sind,
- den ersten optischen Zirkulator (30) mit drei Eingängen, wobei der erste Eingang mit dem Zweig zur optischen Zentrale (OC) verbunden ist, wobei der zweite Eingang mit den Auswahlmitteln (32, 32bis) verbunden ist, wobei der dritte Eingang mit dem zweiten Verstärkungsmedium (35) verbunden ist,
- den zweiten optischen Zirkulator (31) mit drei Eingängen, wobei der erste Eingang mit dem Zweig zur ersten optischen Komponente (25, 28) verbunden ist, der zweite Eingang mit Wellenlängen-Filtermitteln (33) verbunden ist, der dritte Eingang mit dem ersten Verstärkungsmedium (34) verbunden ist.

2. Optisches Netz nach Anspruch 1, bei dem die Auswahlmittel (32) der optischen Leistungssteigerung Mittel zur Verteilung der optischen Leistung des optischen Verstärkungssignals zwischen dem ersten (34) und dem zweiten (35) passiven Verstärkungsmedium umfassen.

3. Optisches Netz nach Anspruch 2, bei dem die Auswahlmittel (32) der optischen Leistungssteigerung Mittel zur Änderung des Werts einer Verteilungsrate der optischen Leistung des optischen Verstärkungssignals zwischen dem ersten (34) und dem zweiten (35) Verstärkungsmedium umfassen.

4. Optisches Netz nach Anspruch 1, bei dem die Auswahlmittel (32bis) der optischen Leistungssteigerung Mittel zum Trennen mindestens einer ersten und einer zweiten optischen Verstärkungskomponente des optischen Verstärkungssignals und Mittel zum Verzweigen der mindestens einen ersten optischen Verstärkungskomponente zu dem ersten passiven Verstärkungsmedium (34) und der mindestens einen zweiten optischen Verstärkungskomponente zu dem zweiten passiven Verstärkungsmedium (35) umfassen.

5. Optisches Netz nach Anspruch 4, bei dem das erste (34) und das zweite (35) passive Verstärkungsmedium jeweils von mindestens einem Wellenleiterabschnitt gebildet sind, der mit Ionen seltener Erden versehen ist, wobei die Ionen seltener Erden, die in dem ersten passiven Verstärkungsmedium (34) verwendet werden, von den Ionen seltener Erden, die in dem zweiten passiven Verstärkungsmedium (35) verwendet werden, verschieden sind.

6. Passive Verstärkungsvorrichtung (3, 3bis) der optischen Leistung mindestens eines optischen Datensignals, wobei die Vorrichtung mit Hilfe eines ersten (30) und eines zweiten (31) optischen Zirkulators in eine optische Faser (24, 26i) eingesetzt ist, die einen Zweig eines passiven optischen Netzes bildet, wobei der Zweig eine optische Zentrale (OC) mit mindestens einer optischen Komponente (25, 28) verbindet,
**dadurch gekennzeichnet, dass** die Vorrichtung Folgendes umfasst:
- ein erstes passives Verstärkungsmedium (34), das geeignet ist, die optische Leistung des optischen Datensignals zu verstärken, wenn dieses den Zweig in einer ersten Übertragungsrichtung durchquert,
- ein zweites passives Verstärkungsmedium (35), das geeignet ist, die optische Leistung des optischen Datensignals zu verstärken, wenn dieses den Zweig in einer zweiten Übertragungsrichtung durchquert, wobei das erste und das zweite passive Verstärkungsmedium dazu bestimmt sind, von einem zweiten optischen Verstärkungssignal erregt zu werden, das von der optischen Zentrale kommt,
- Auswahlmittel (32, 32bis) der optischen Leistungssteigerung des ersten (34) und des zweiten (35) Verstärkungsmediums in Abhängigkeit von optischen Verlusten, die der ersten bzw. der zweiten Übertragungsrichtung des optischen Datensignals zugeordnet sind,
- den ersten optischen Zirkulator (30) mit drei Eingängen, wobei der erste Eingang mit dem Zweig zur optischen Zentrale (OC) verbunden ist, der zweite Eingang mit den Auswahlmitteln (32, 32bis) verbunden ist, der dritte Eingang mit dem zweiten Verstärkungsmedium (35) verbunden ist,
- den zweiten optischen Zirkulator (31) mit drei Eingängen, wobei der erste Eingang mit dem Zweig zur ersten optischen Komponente (25, 28) verbunden ist, der zweite Eingang mit Wellenlängen-Filtermitteln (33) verbunden ist, der dritte Eingang mit dem ersten Verstärkungsmedium (34) verbunden ist.

7. Vorrichtung nach Anspruch 6, bei der die Auswahlmittel (32, 32bis) der optischen Leistungssteigerung Mittel zur Änderung des Werts einer Verteilungsrate der optischen Leistung des optischen Verstärkungssignals zwischen dem ersten (34) und dem zweiten (35) Verstärkungsmedium umfassen.

8. Vorrichtung nach Anspruch 6, bei der die Auswahlmittel (32, 32bis) der optischen Leistungssteigerung Mittel zum Trennen mindestens einer ersten und einer zweiten optischen Verstärkungskomponente des optischen Verstärkungssignals und Mittel zum Verzweigen der mindestens einen ersten optischen Verstärkungskomponente zu dem ersten passiven Verstärkungsmedium (34) und der mindestens einen zweiten optischen Verstärkungskomponente zu dem zweiten passiven Verstärkungsmedium (35) umfassen.

## Claims

1. Passive optical network having an optical exchange (OC) linked to at least one first optical component (25, 28) by at least one optical fibre (24, 26i) forming a branch of said network, said optical exchange comprising:
- means (20, R) for transmitting/receiving at least one optical data signal,
- means (210) for transmitting at least one optical amplification signal,
- said branch enabling bidirectional transmission of the optical data signal and of the optical amplification signal,
**characterized in that** said branch comprises at least one passive device (3, 3bis) for the amplification of the optical data signal, the device being inserted into the branch by means of a first (30) and a second (31) optical circulator and comprising:
- a first passive amplification medium (34) able to amplify the optical power of the optical data signal when the latter travels through the branch in a first direction of transmission,
- a second passive amplification medium (35) able to amplify the optical power of the optical data signal when the latter travels through the branch in a second direction of transmission, the first and second passive amplification media being intended to be excited by the optical amplification signal,
- means (32, 32bis) for selecting the optical power gain of the first and second amplification media as a function of optical losses respectively associated with the first and second directions of transmission of the optical data signal,
- the first three-part optical circulator (30), the first port being linked to the branch leading to the optical exchange (OC), the second port being linked to the selecting means (32, 32bis), the third port being linked to the second amplification medium (35),
- the second three-part optical circulator (31), the first port being linked to the branch leading to the first optical component (25, 28), the second port being linked to means (33) for wavelength filtering, the third port being linked to the first amplification medium (34).

2. Optical network according to Claim 1, wherein the means (32) for selecting the optical power gain comprise means for distributing the optical power of said optical amplification signal between the first (34) and second (35) passive amplification media.

3. Optical network according to Claim 2, wherein the means (32) for selecting the optical power gain comprise means for modifying the value of a rate of distribution of the optical power of the optical amplification signal between the first (34) and second (35) amplification media.

4. Optical network according to Claim 1, wherein the means (32bis) for selecting the optical power gain comprise means for separating at least one first and one second optical amplification component from the optical amplification signal and means for routing said at least one first optical amplification component to the first passive amplification medium (34) and said at least one second optical amplification component to the second passive amplification medium (35).

5. Optical network according to Claim 4, wherein the first (34) and second (35) passive amplification media are each formed by at least one section of a rare-earth-ion-doped waveguide, the rare earth ions used in the first passive amplification medium (34) differing from the rare earth ions used in the second passive amplification medium (35).

6. Passive device (3, 3bis) for the amplification of the optical power of at least one optical data signal, said device being inserted into an optical fibre (24, 26i) forming a branch of a passive optical network by means of a first (30) and a second (31) optical circulator, said branch linking an optical exchange (OC) to at least one optical component (25, 28),
**characterized in that** said device has:
- a first passive amplification medium (34) able to amplify the optical power of the optical data signal when the latter travels through the branch in a first direction of transmission,
- a second passive amplification medium (35) able to amplify the optical power of the optical data signal when the latter travels through the branch in a second direction of transmission, the first and second passive amplification media being intended to be excited by a second optical amplification signal from the optical exchange,
- means (32, 32bis) for selecting the optical power gain of the first (34) and second (35) amplification media as a function of optical losses respectively associated with the first and second directions of transmission of the optical data signal,
- the first three-part optical circulator (30), the first port being linked to the branch leading to the optical exchange (OC), the second port being linked to the selecting means (32, 32bis), the third port being linked to the second amplification medium (35),
- the second three-part optical circulator (31), the first port being linked to the branch leading to the first optical component (25, 28), the second port being linked to means (33) for wavelength filtering, the third port being linked to the first amplification medium (34).

7. Device according to Claim 6, wherein the means (32, 32bis) for selecting the optical power gain comprise means for modifying the value of a rate of distribution of the optical power of the optical amplification signal between the first (34) and second (35) amplification media.

8. Device according to Claim 6, wherein the means (32, 32bis) for selecting the optical power gain comprise means for separating at least one first and one second optical amplification component from the optical amplification signal and means for routing said at least one first optical amplification component to the first passive amplification medium (34) and said at least one second optical amplification component to the second passive amplification medium (35).
